# EUROPEAN PATENT APPLICATION

(11) **EP 1 852 876 A1**
(43) Date of publication of application: **07.11.2007**
(21) Application number: 06113544.8
(22) Date of filing: 05.05.2006
(51) Int. Cl.: H01B 7/28, C08K 5/54

(54) **An electric insulation material composition, a method of production thereof and use thereof**

(71) Applicant: ABB RESEARCH LTD., 8050 Zürich (CH)
(72) Inventor: Hillborg, Henrik, 722 10 Västeras (SE); Roseen, Patrik, 724 63 Västeras (SE)
(74) Representative: Fröderberg, Anders Oskar

(57) **Abstract**

An electric insulation material, comprising a thermoplastic matrix. The material comprises a hydrophobic agent embedded in said matrix.

## Description

### TECHNICAL FIELD

The present invention relates to an electric insulation material, comprising a thermoplastic matrix.

The invention also relates to a method of producing an electric insulation material, comprising moulding of a thermoplastic resin into a matrix of a thermoplastic polymer.

In particular, it is conceived that an electric insulation device formed by said insulation material should be used in medium and, possibly, high voltage applications, and, in particular, in a moisture-containing environment in which there might be particulate matter that might deposit on a surface of said material. Typically, such an environment is an outdoor environment in which the material is subjected both to humidity and contamination.

Medium voltage is referred to as from about 1 kV up to about 40 kV, while high voltage is referred to as from about 40 kV up to about 150 kV.

### BACKGROUND OF THE INVENTION

Traditionally, electrical insulation devices for medium and high voltage applications, ranging from about 1 kV up to about 150 kV have used a thermosetting resin such as epoxy as an electrically insulating material. Apart from having good insulating properties, such a material also has a desirable mechanical strength enabling it to be used as a load-carrying material, for example in electric bushings, fuse canisters etc.

An inherent property of a thermosetting resin such as epoxy is its hydrophobic character. Accordingly, initially, in a moisture-containing environment, such as an outdoor environment, the hydrophobic character of such a material will prevent a film of water from gathering on the surface of an insulation element made of a material such as epoxy. However, with time, the hydrophobic property of the surface of an element made of epoxy will decrease and finally a continuous film of water will be able to form at the surface. The existence of such a film will promote the upcoming of sparking and, in the long run, a short-circuit detrimental to the function of the insulation element. A solution of this problem is to dimension the element accordingly, such that the insulation capacity thereof will be satisfying even in the presence of said water film.

Silicone rubber has much better outdoor insulation properties than epoxy since it is hydrophobic and since the surface thereof regenerates its hydrophobic properties by a transport of low molecular chains of silicone oil to the surface. There is ongoing research for providing epoxy with similar properties by an incorporation of silicone into the matrix thereof However, the diffusion of silicone through a thermosetting resin with a high grade of cross-linking, such as epoxy, is very slow, and the silicone tends to gather and remain as isolated islands in the epoxy matrix rather than diffusing to the outer surface thereof

Silicone rubber itself may be used as an insulation material in medium and, preferably, high voltage applications. However, it does not have the mechanical properties to be used as a load-carrying element like, for example, epoxy. Silicon rubber may be deposited as a film onto insulating elements made of other materials, such as epoxy or a ceramic, in order to provide the latter with improved insulation properties and in order to generate a hydrophobic surface.

Lately, in order to lower production costs, thermoplastic polymers, like PE, have been conceived as an insulation material in medium and high voltage applications. Like epoxy, thermoplastic polymers have a hydrophobic surface, the hydrophobic property of which however declines with time.

### THE OBJECT OF THE INVENTION

The object of the present invention is to present an electric insulation material and a method of producing such an insulation material, by which the insulation material has a self-generating hydrophobic surface, in order to prevent the upcoming of a water film on the surface of the material in humid environments.

An insulation element made of said insulation material should have inherent mechanical properties making it useful as a load-carrying element, apart from its electric insulation capacity.

The insulation material as well as the method for producing it should be cost effective in relation to prior art.

### SUMMARY OF THE INVENTION

The object of the invention is achieved by means of the initially defined insulation material, characterised in that it comprises a hydrophobic agent embedded in said matrix. Should the thermoplastic matrix be regarded as hydrophobic itself, it is to be understood that the hydrophobic agent presents a separate hydrophobic phase, preferably of more hydrophobic character than said matrix, or at least of a more long-lasting character, i.e. a more permanent hydrophobic character over time.

The inherent properties of the hydrophobic agent should be such that it will diffuse towards the surface of a body formed by said thermoplastic matrix. A lower surface energy of the hydrophobic agent than the thermoplastic is preferred, since such a difference will promote said diffusion towards the surface.

According to one embodiment the hydrophobic agent is subdivided in two categories of hydrophobic agents, wherein there is a difference in the diffusion rate of the two categories through the thermoplastic matrix. Thereby, a short time effect, guaranteeing an immediate maintenance of the hydrophobic surface properties will be obtained, as well as more long-lasting maintenance of said properties. One of said categories of hydrophobic agent may be of a fully non-diffusing character, but may, preferably, be concentrated to the surface region of the material during production, i.e. molding, thereof. In other words, the concentration of a hydrophobic agent that does not diffuse in the thermoplastic matrix is, preferably, higher in the vicinity of an outer surface of an electric insulation element made of said thermoplastic than in at a location more remote from said surface.

According to a preferred embodiment the hydrophobic agent comprises silicone. Silicone has splendid hydrophobic properties, and may be added to a thermoplastic in different forms or shapes, as will be further discussed later.

Preferably at least a part of the hydrophobic agent is comprised by a hydrophobic thermoplastic elastomer embedded in said matrix. The hydrophobic thermoplastic elastomer will bring an improved, enhanced, long lasting hydrophobic effect on the surface of an insulating element made of said thermoplastic polymer. Most probably, it will not diffuse through the matrix, but it will easily be evenly distributed in the surface region of said thermoplastic element or throughout the matrix thereof.

According to a preferred embodiment the thermoplastic elastomer comprises a copolymer comprising poly urea and a poly siloxane as its main constituents. Among the polysiloxanes, polydimethylsiloxane is preferred as the elastomer. The elastomer will have a lower glass transition temperature Tg than the thermoplastic and will bring a more soft, rubber-like feeling as well as improved hydrophobic properties to the material, while the thermoplastic will form a mechanically stabilising part.

Preferably at least a part of the hydrophobic agent is comprised by a silicone oil embedded in the thermoplastic. A silicone oil will have the inherent capability of diffusing through almost any material, including any thermoplastic polymer. Should the surface of an insulating element made of a thermoplastic be contaminated with dirt or particulate matter that might form a site that promotes the formation of a water film, or be electrically conducting in itself, the silicone oil will diffuse through or penetrate said contamination or particulate matter and position itself on top thereof, thereby guaranteeing a maintained hydrophobic surface of said element.

According to a preferred embodiment, the silicone oil comprises two different fractions, wherein there is a difference in the diffusion rate of the silicone of the two fractions through the thermoplastic matrix.

Preferably, the difference in diffusion rate is achieved by use of a silicone oil that comprises two different fractions of different molecular weight. The fraction of lower length typically has a molecule length with 3-8 repeating units, and with a weight corresponding to less than 10 centistokes. The fraction of higher length typically has a length or weight corresponding to more than 10 centistokes, preferably more than 100 centistokes. Molecule lengths corresponding to more than 200 centistokes and even more than 1000 are also conceivable. The use of more than two fractions of different diffusion rate/molecule length is, off course, also within the scope of the invention.

The object of the invention is also achieved by means of the initially defined method, characterised in that a hydrophobic agent is added to said thermoplastic resin.

For reasons already mentioned, it is preferred that an hydrophobic agent subdivided into two categories of hydrophobic agent is added to said thermoplastic resin, wherein there is a difference in the diffusion rate of the two categories through the thermoplastic matrix.

Preferably, at least a part of the hydrophobic agent is comprised by a hydrophobic thermoplastic elastomer which is added to said thermoplastic resin.

It is also preferred, for reasons already mentioned, that said thermoplastic elastomer comprises poly urea and a poly siloxane, the latter preferably comprising polydimethylsiloxane.

Preferably at least a part of the hydrophobic agent is comprised by a silicone oil which is added to said thermoplastic resin.

At least a part of the hydrophobic agent should be comprised by two different silicone oils which are added to said thermoplastic resin, wherein there is a difference in the diffusion rate of said agent of the two silicone oils through the thermoplastic matrix. The two silicone oils are of different molecule length in order to have different diffusion rates.

The invention also includes an electric insulation element comprising the insulating material according to the invention. Preferably, said element is used in an environment in which it subjected to humidity and, possibly, also pollution. The inventive material should form the boundary layer towards said environment.

Next, an example of the production of a material according to the invention is given.

### EXAMPLE

A liquid thermoplastic resin comprising PE is mixed with a thermoplastic elastomer comprising poly urea and polydimethylsiloxan. The thermoplastic polymer is commercially available under the name Geniomer by Wacker, Germany. Furthermore, a silicone oil is added to the resin, said oil being subdivided into two fractions of different molecule length. The resulting mixture contains 90 wt% PE, 8 wt% thermoplastic elastomer, 1 wt% silicone oil with a molecule length corresponding to 5 centistokes, and 1 wt% silicone oil with a molecule length corresponding to 350 centistokes.

The resulting mixture may be moulded, for example injection moulded, into the desired shape of an electric insulation element.

The moulded mixture is let to cool and, thereby, to solidify into an element with electrically insulating properties. The resulting polymer will comprise a thermoplastic matrix of PE in which the further ingredients are evenly distributed. With time, the silicone oil will, thanks to its low surface energy, diffuse towards the outer surface of the moulded element, thereby contributing to a regeneration of the hydrophobic character thereof. Should the element be located in a humid and polluted environment in which a layer of pollution is deposited onto the surface thereof, the silicon oil will also penetrate said layer, thereby preventing a water film from upcoming in top of or in said layer.

In general terms it is preferred that the resulting mixture contains:
86-99,7 wt% thermoplastic resin, forming the thermoplastic matrix, preferably PE or PA (Poly Amide),
0,1-10 wt% thermoplastic elastomer, preferably comprising poly urea and polydimethylsiloxan,
0,1-2 wt% silicone oil with a molecule length corresponding to 2-7 centistokes,
0,1-2 wt% silicone oil with a molecule length corresponding to above 100 centistokes, for example 350 centistokes.

It should be understood that further additives that might be desired, such as UV stabilisers, flame retarding agents, etc, may be added to the above mixture in order to produce a material suitable for any specific application, and that the inventive material is not delimited to containing only the components that have been discussed above.

## Claims

1. An electric insulation material, comprising a thermoplastic matrix, **characterised in that** it comprises a hydrophobic agent embedded in said matrix.

2. An electric insulation material according to claim 1, **characterised in that** the inherent properties of the hydrophobic agent are such that it will diffuse towards the surface of a body formed by said thermoplastic matrix.

3. An electric insulation material according to claim 1 or 2, **characterised in that** the hydrophobic agent is subdivided in two categories of hydrophobic agents, wherein there is a difference in the diffusion rate of the two categories through the thermoplastic matrix.

4. An electric insulation material according to any one of claims 1-3, **characterised in that** the hydrophobic agent comprises silicone.

5. An electric insulation material according to any one of claims 1-4, **characterised in that** at least a part of the hydrophobic agent is comprised by a hydrophobic thermoplastic elastomer embedded in said matrix.

6. An electric insulation material according to claim 5, **characterised in that** the thermoplastic elastomer comprises poly urea and a poly siloxane.

7. An electric insulation material according to claim 6, **characterised in that** said poly siloxane comprises a poly dimethylsiloxane.

8. An electric insulation material according to any one of claims 1-7, **characterised in that** at least a part of the hydrophobic agent is comprised by a silicone oil embedded in the thermoplastic.

9. An electric insulation material according to any claim 8, **characterised in that** the silicone oil comprises two different fractions, wherein there is a difference in the diffusion rate of the silicone of the two fractions through the thermoplastic matrix

10. An electric insulation material according to claim 9, **characterised in that** the silicone oil comprises two different fractions of different molecular weight.

11. A method of producing an electric insulation material, comprising moulding of thermoplastic resin into a matrix of a thermoplastic polymer, **characterised in that** a hydrophobic agent is added to said thermoplastic resin.

12. A method according to claim 11, **characterised in that** said agent subdivided into two categories of hydrophobic agent is added to said thermoplastic resin, wherein there is a difference in the diffusion rate of the two categories through the thermoplastic matrix.

13. A method according to claim 11 or 12, **characterised in that** at least a part of the hydrophobic agent is comprised by a hydrophobic thermoplastic elastomer which is added to said thermoplastic resin.

14. A method according to claim 13, **characterised in that** said thermoplastic elastomer comprises poly urea and a poly siloxane.

15. A method according to claim 14, **characterised in that** at least a part of the hydrophobic agent is comprised by a silicone oil which is added to said thermoplastic resin.

16. A method according to claim 15, **characterised in that** at least a part of the hydrophobic agent is comprised by two different silicone oils which are added to said thermoplastic resin, wherein there is a difference in the diffusion rate of said agent of the two silicone oils through the thermoplastic matrix.

17. A method according to claim 16, **characterised in that** the two silicone oils are of different molecule length.

18. An electric insulation element, **characterised in that** it comprises a material according to any one of claims 1-10

19. Use of the electric insulation material according to any one of claims 1-10 as an electric insulation element in a moisture-containing environment.

20. Use according to claim 19, **characterised in that** said environment contains particulate matter that will be deposited on an outer surface of said electric insulation device.

21. Use according to claim 19 or 20, **characterised in that** said environment is an out-door environment.
